# EUROPÄISCHE PATENTANMELDUNG

(11) **EP 1 564 093 A2**
(43) Veröffentlichungstag der Anmeldung: **17.08.2005**
(21) Anmeldenummer: 04106510.3
(22) Anmeldetag: 13.12.2004
(51) Int. Cl.: B60S 1/08, B60R 1/06

(54) **Anordnung zur Befestigung eines Rückspiegels und eines optischen Sensors**

(30) Priorität: 17.02.2004 DE 102004007516
(71) Anmelder: ROBERT BOSCH GMBH, 70442 Stuttgart (DE)
(72) Erfinder: Schneider, Andreas, 20012 Shanghai (CN)

(57) **Zusammenfassung**

Die Erfindung betrifft eine Anordnung (1) zur Befestigung eines Rückspiegels und eines optischen Sensormoduls (4), insbesondere eines Regensensormoduls an einer zu einem Fahrgastraum eines Kraftfahrzeugs weisenden Innenseite einer Windschutzscheibe (15), bei der ein Befestigungssockel (3) des Rückspiegels und das Sensormodul (4) jeweils an der Windschutzscheibe (15) bzw. miteinander verklebbar sind.

Es ist vorgesehen, dass der Befestigungssockel (3) des Rückspiegels und das Sensormodul (4) jeweils Mittel zur definierten gegenseitigen Zuordnung von Montagepositionen des Sensormoduls (4) sowie des Befestigungssockels (3) an der Innenseite der Windschutzscheibe (15) aufweisen.

## Beschreibung

Die vorliegende Erfindung betrifft eine Anordnung zur Befestigung eines Rückspiegels und eines optischen Sensors, insbesondere eines Regensensormoduls an einer zu einer Fahrgastraum weisenden Innenseite einer Windschutzscheibe eines Kraftfahrzeuges.

### Stand der Technik

Zur Steuerung einer Scheibenwischanlage eines Kraftfahrzeuges können die Signale eines optischen Sensors ausgewertet werden, der an einer Innenseite einer Windschutzscheibe des Fahrzeugs angeordnet ist. Der optische Sensor kann Änderungen des Reflexionsverhaltens erfassen, die auf eine Benetzung der Scheibe mit Regentropfen bzw. mit feuchtem Niederschlag wie Nebel oder Schnee zurückzuführen ist. Derartige optische Sensoren werden meist als Regensensoren bezeichnet und sind bspw. aus der DE 198 39 273 A1 und aus der DE 198 46 969 A1 bekannt.

Sog. Innenrückspiegel werden seit einigen Jahren üblicherweise mittels eines Befestigungssockels an einem oberen mittleren Bereich der Kraftfahrzeugwindschutzscheibe befestigt, insbesondere verklebt. Die zunehmend häufiger eingesetzten Regensensormodule können ebenfalls im mittleren oberen Bereich der Windschutzscheibe angeordnet und dort verklebt werden. Der typische Einbauort solcher Regensensormodule befindet sich normalerweise in unmittelbarer Nachbarschaft zum Spiegelfuß, da auf diese Weise keine zusätzliche Sichtfeldeinschränkung gebildet wird. Regensensormodul und Befestigungssockel des Innenspiegels können ggf. gleichzeitig oder nacheinander montiert und auf die Scheibe geklebt werden. Oftmals wird auch eine gemeinsame Abdeckung für Spiegelfuß und Regensensormodul verwendet, um die getrennte Ausführung dieser beiden Komponenten optisch zu kaschieren. Normalerweise jedoch werden beide Befestigungselemente für Spiegel und Regensensormodul jeweils einzeln an die Scheibe geklebt.

Eine Aufgabe der vorliegenden Erfindung wird darin gesehen, eine optimierte Montagemöglichkeit für einen Innenrückspiegel und ein Regensensormodul zur Verfügung zu stellen, um das Regensensormodul so unauffällig wie möglich erscheinen zu lassen.

Die Aufgabe wird mit dem Gegenstand des unabhängigen Patentanspruchs gelöst. Merkmale vorteilhafter Weiterbildungen der Erfindung lassen sich den abhängigen Ansprüchen entnehmen.

### Vorteile der Erfindung

Eine erfindungsgemäße Anordnung zur Befestigung eines Rückspiegels und eines optischen Sensormoduls an einer Kraftfahrzeugwindschutzscheibe mit den Merkmalen des Anspruchs 1 sieht vor, dass ein Befestigungssockel des Rückspiegels und das Sensormodul jeweils Mittel zur definierten gegenseitigen Zuordnung von Montagepositionen der beiden Bauteile an der Scheibe aufweisen. Hiermit kann sichergestellt werden, dass die beiden Bauteile immer in gleicher Weise und in gleichem Abstand bzw. in definierter Anordnung zueinander an der Scheibe montierbar sind. Die Mittel können für einen zumindest teilweisen Formschluss von zueinander weisenden bzw. aneinander grenzenden bzw. ineinander greifenden Seitenflächen des Befestigungssockels und des optischen Sensormoduls sorgen. Das Sensormodul kann auf diese Weise immer so montiert werden, dass zumindest für den Fahrer keine zusätzliche Sichtfeldeinschränkung resultiert.

Die ineinander greifenden Mittel sehen eine eindeutige gegenseitige Zuordnung der Montageorte von Spiegelfuß bzw. Befestigungssockel des Innenspiegels und Sensormoduls vor. Solche Mittel können beispielsweise als miteinander korrespondierende Nut-/Stegpassungen ausgebildet sein, wobei eine Nut am Befestigungssockel in einen entsprechenden Steg am Sensormodul eingreift oder umgekehrt. Hierdurch können die beiden Bauteile in unmittelbarer Nachbarschaft zueinander montiert werden, wobei gleichzeitig für eine eindeutige Zuordnung der jeweiligen Montageorte gesorgt ist.

Eine alternative Variante sieht vor, dass der Befestigungssockel des Innenspiegels einen umlaufenden Rahmen aufweist, innerhalb dessen geschlossenen Umfangs das Sensormodul montiert werden kann. Das Sensormodul kann wahlweise mit dem Rahmen verbunden werden, beispielsweise durch einen entsprechenden Absatz an dessen innerem Umfang. Wahlweise kann es auch getrennt vom Rahmen mit der Scheibe verklebt werden. Anschließend kann dann der Befestigungssockel aufgesetzt werden, wobei das Sensormodul vollständig vom Befestigungssockel umschlossen wird.

Eine alternative Befestigungsvariante besteht darin, dass zumindest ein Teil einer Andrückkraft des Sensormoduls an die Windschutzscheibe über eine Haftkraft zwischen einer Befestigungsfläche des Befestigungssockels an der Windschutzscheibe aufgebracht ist. Hierbei ist die Fixierung der Halteplatte an der Scheibe aufgrund des über den Halterahmen des Sensors reichenden Spiegelfußes verbessert. Bei dieser Variante kann in vorteilhafter Weise die Befestigungskraft des Sensormoduls mittels der zusätzlichen Nutzung der Klebefläche des Spiegels erhöht werden. Die Konturen des Befestigungssockels und/oder des Spiegelfußes können hierbei in weiten Grenzen sehr variabel gestaltet werden. So ist bspw. kein geschlossener Befestigungssockel notwendig.

Weitere Varianten des Regensensormoduls und des Befestigungssockels sind denkbar, beispielsweise eine Montage des Sensormoduls am Sockel mittels Zapfen, die in den Sockel eingreifen. Hierbei wird das Sensormodul zuvor mit dem Befestigungssockel des Innenspiegels verbunden, bevor dieser an der Scheibe montiert wird. Gegebenenfalls kann der Befestigungssockel Durchführungen für Kabelverbindungen oder Zuleitungen aufweisen, die zur Signalübertragung und zur Energieversorgung des Sensormoduls notwendig sind.

Wenn im vorliegenden Zusammenhang von einem Sensormodul bzw. einem optischen Sensormodul die Rede ist, so ist damit normalerweise ein sog. Regensensormodul gemeint. Ggf. kann das Sensormodul jedoch auch andere bzw. zusätzliche Aufgaben erfüllen, bspw. zur Steuerung eines Fahrlichts des Kraftfahrzeugs je nach erfasster Umgebungshelligkeit.

### Zeichnungen

Die Erfindung wird nachfolgend anhand eines bevorzugten Ausführungsbeispiels unter Bezugnahme auf die beiliegenden Zeichnungen näher erläutert. Dabei zeigt:
- Figur 1: eine erste Variante der erfindungsgemäßen Anordnung in schematischer Draufsicht,
- Figur 2: eine zweite Variante der Anordnung in schematischer Draufsicht,
- Figur 3: eine schematische Schnittdarstellung einer dritten Variante der Anordnung,
- Figur 4: eine weitere schematische Schnittdarstellung einer vierten Variante der Anordnung und
- Figur 5: eine schematische Draufsicht einer Ausgestaltung der erfindungsgemäßen Anordnung.

### Beschreibung der Ausführungsbeispiele

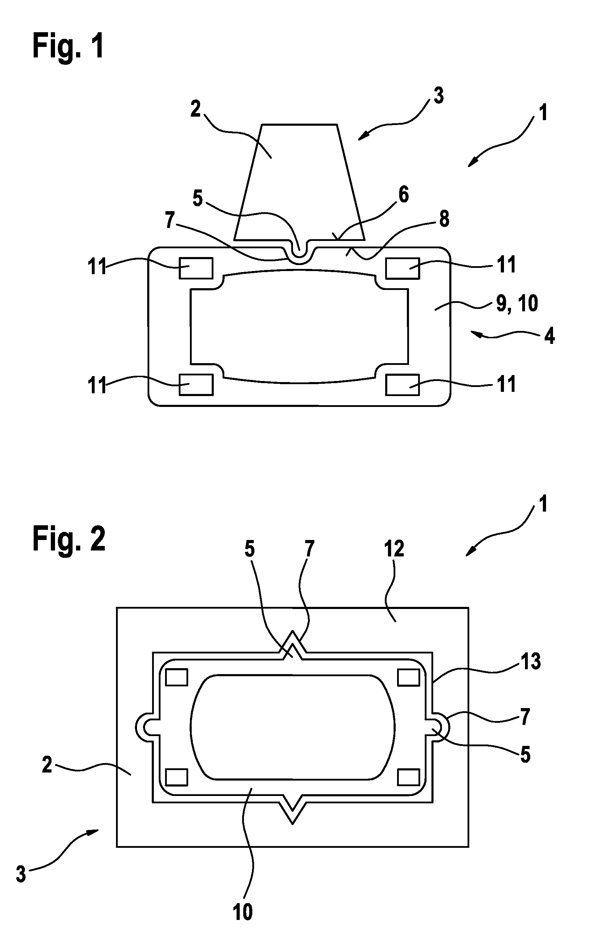

Die erste Variante einer erfindungsgemäßen Anordnung 1 gemäß Figur 1 zeigt eine trapezförmige Befestigungsfläche 2 eines Befestigungssockels 3 eines Innenspiegels, der mittels der Befestigungsfläche 2 an einer Innenseite einer Windschutzscheibe eines Kraftfahrzeuges befestigt, insbesondere verklebt werden kann. Da es aus optischen Gründen sowie aus Sicherheitsgründen wünschenswert ist, ein optisches Sensormodul 4 möglichst nahe am Befestigungssockel 3 des Innenspiegels zu montieren, sieht die erfindungsgemäße Anordnung 1 miteinander korrespondierende Mittel zur definierten gegenseitigen Zuordnung der Montagepositionen des Sensormoduls 4 sowie des Befestigungssockels 3 vor. Diese Mittel umfassen im dargestellten Ausführungsbeispiel einen Steg 5 an einer zum Sensormodul 4 weisenden Seitenfläche 6 des Befestigungssockels 3, der mit einer entsprechenden Nut 7 an einer zum Befestigungssockel 3 weisenden Gehäuseseite 8 des Sensormoduls 4 eingreifen kann, so dass eine eindeutige Zuordnung der gegenseitigen Montagepositionen von Befestigungssockel 3 des Rückspiegels und Sensormodul 4 definiert ist. Auf diese Weise kann das Sensormodul 4 nach Montage des Befestigungssockels 3 stets in richtiger räumlicher Zuordnung zu diesem montiert werden. Somit kann sichergestellt werden, dass das Sensormodul 4 keine zusätzliche Sichtfeldeinschränkung für einen Fahrer des Kraftfahrzeuges bildet.

Das optische Sensormodul 4 umfasst insbesondere einen Regensensor, der in Abhängigkeit von einem Benetzungsgrad der Windschutzscheibe mit Feuchtigkeit oder Niederschlag ein Steuersignal für eine Scheibenwischanlage des Fahrzeugs liefern kann. Ggf. kann das Sensormodul 4 auch einen zusätzlichen Helligkeitssensor o. dgl. aufweisen, der in Abhängigkeit von der Umgebungshelligkeit ein Steuersignal für eine Fahrzeugbeleuchtung liefern kann. Ein Gehäuse 9 des Sensormoduls 4 weist einen geschlossenen Sensorrahmen 10 auf, über den das Sensormodul 4 mit der Innenseite der Scheibe verklebt werden kann. Im gezeigten Ausführungsbeispiel sind hierfür vier Klebestellen 11 an den jeweiligen Ecken des Sensorrahmens 10 vorgesehen.

Eine zweite Variante des Befestigungssockels 3 für den Rückspiegel gemäß Figur 2 weist einen umlaufenden Sockelrahmen 12 mit einer inneren Aussparung 13 auf, die so bemessen ist, dass das Sensormodul 4 darin platziert werden kann. Das rechteckförmige Sensormodul 2 weist an seinen Gehäuseseiten 8 jeweils Stege 5 auf, sie in entsprechende Nuten 7 an den inneren Seiten des umlaufenden Sockelrahmens 12 eingreifen und somit die Einbaupositionen der beiden Bauteile zueinander festlegen. Die Stege 5 und Nuten 7 können jeweils unterschiedliche Konturen aufweisen, wie dies anhand der Figur 2 verdeutlicht ist. So weisen die Stege 5 und Nuten 7 an den Schmalseiten jeweils eine abgerundete Kontur auf, während die Stege 5 und Nuten 7 an den Längsseiten jeweils dreieckförmig ausgebildet sind.

Der Sensorrahmen 10 des Sensormoduls 4 wird bei dieser zweiten Variante zunächst mittels der Klebestellen 11 auf der Scheibe verklebt, wonach der Befestigungssockel 3 über das Sensormodul 4 gestülpt und ebenfalls mit der Scheibe verklebt wird. Wahlweise kann der Befestigungssockel 3 mittels der gesamten Befestigungsfläche 2 des Sockelrahmens 12 flächig mit der Scheibe verklebt werden. Ggf. kann jedoch auch eine Befestigung mittels einzelner Klebestellen, bspw. an den Ecken des Sockelrahmens 12, ausreichen.

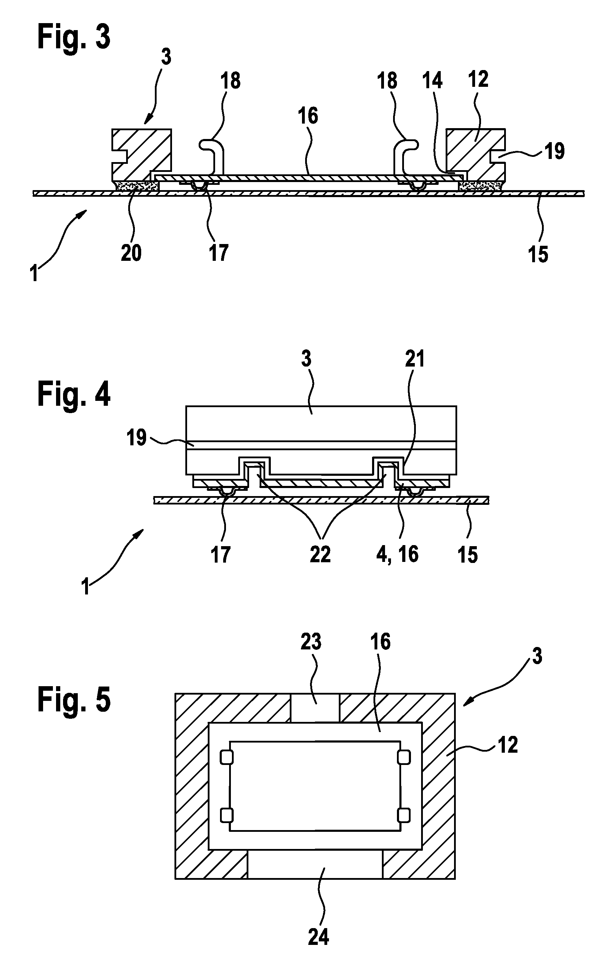

Die schematische Schnittdarstellung der Figur 3 zeigt eine weitere Variante der erfindungsgemäßen Anordnung 1, bei der der umlaufende Sockelrahmen 12 einen Absatz 14 aufweist, der zur Aufnahme des Sensormoduls dient. Der Absatz 14 ist zumindest an zwei gegenüber liegenden Innenseiten des Sockelrahmens 12 vorgesehen, kann jedoch auch an allen vier Innenseiten vorgesehen sein. Das Sensormodul kann beispielsweise zuvor mit dem Sockelrahmen 12 verklebt oder verschnappt werden, wonach dieser auf die Scheibe 15 aufgesetzt und mit dieser verklebt wird.

Vom Sensormodul ist in der Figur 3 lediglich eine Halteplatte 16 gezeigt, die über Abstandshalter 17 in definiertem Abstand zur Scheibe 15 gehalten ist. An der Oberseite der Halteplatte 16 sind Befestigungseinrichtungen 18 zur Montage der eigentlichen Sensorbauteile (optische und/oder elektronische Elemente) des Sensormoduls 4 vorgesehen. An den Außenseiten des Sockelrahmens 12 sind seitliche Aufnahmen 19 zur Befestigung des Innenspiegels vorgesehen. Die Klebefläche 20 bildet die feste Verbindung zur Scheibe 15.

Derartige Befestigungssockel 3 für den Spiegel bestehen oftmals aus Sintermetall, um die notwendige Festigkeit und Stabilität bieten zu können. Die Halteplatte 16 für das Sensormodul 4 kann bspw. aus Aluminiumdruckguss oder aus einem Blechbiegeteil, um die notwendigen feinen Strukturen darstellen zu können. Bei der Variante gemäß Figur 3 können die beiden Bauteile wahlweise aus unterschiedlichen Materialien bestehen, die auf ihren jeweiligen Einsatzzweck hin optimiert sind. Die Halteplatte 16 des Sensormoduls 4 kann über eine gemeinsame Klebefläche 20 am Sockelrahmen 12 des Befestigungssockels 3 gehalten werden. Wahlweise kann die Halteplatte 16 auch mit dem Befestigungssockel 3 verpresst, verklebt oder verschweißt werden, was insgesamt die Montage an der Scheibe 15 erleichtern kann. Ggf. können die in Figur 2 gezeigten Justierhilfsmittel vorhanden sein. Die Abstandshalter 17 an der Halteplatte 16 definieren sowohl den Abstand zu Scheibe 15 als auch die Dicke der Klebefläche 20.

Ein erwähnenswerter Vorteil der in Figur 3 gezeigten Befestigungsvariante besteht darin, dass aufgrund des über den Halterahmen des Sensors reichenden Spiegelfußes die Fixierung der Halteplatte 16 an der Scheibe 15 verbessert ist. Es wird dadurch die Befestigungskraft mittels der Nutzung der Klebefläche des Spiegels erhöht.

Eine vorteilhafte Variante der erfindungsgemäßen Anordnung kann einen einseitig offenen Befestigungssockel 3 vorsehen, dessen offene Seite ggf. mittels eines zusätzlichen Deckels (nicht dargestellt) verschlossen werden kann.

Die Figur 4 verdeutlicht eine weitere alternative Befestigungsmöglichkeit, bei der im Befestigungssockel 3 Aufnahmen 21 vorgesehen sind, in die entsprechende Zapfen 22 am Sensormodul 4 eingreifen können. Die Abstandshalter 17 sorgen wiederum für den definierten Abstand der Halteplatte 16 zur Scheibe 15. Die umlaufende Aufnahme 19 an den Seitenflächen des Sockels 3 ermöglicht nach dem Verkleben des Sockels 3 mit dem damit verbundenen Sensormodul 4 die Montage des Spiegelfußes am Befestigungssockel 3.

Die schematische Draufsicht der Figur 5 verdeutlicht mögliche Ausgestaltungen der Erfindung, wobei im geschlossenen Sockelrahmen 12 Durchbrüche 23 und 24 für einen Stecker oder für sonstige Bauteile des Sensormoduls 4, bspw. für einen Schieber des Regensensormoduls vorgesehen sind.

## Patentansprüche

1. Anordnung zur Befestigung eines Rückspiegels und eines optischen Sensormoduls (4), insbesondere eines Regensensormoduls an einer zu einem Fahrgastraum eines Kraftfahrzeugs weisenden Innenseite einer Windschutzscheibe (15), bei der ein Befestigungssockel (3) des Rückspiegels und das Sensormodul (4) jeweils an der Windschutzscheibe (15) bzw. miteinander verklebbar sind, **dadurch gekennzeichnet, dass** der Befestigungssockel (3) des Rückspiegels und das Sensormodul (4) jeweils Mittel zur definierten gegenseitigen Zuordnung von Montagepositionen des Sensormoduls (4) sowie des Befestigungssockels (3) an der Innenseite der Windschutzscheibe (15) aufweisen.

2. Anordnung nach Anspruch 1, **dadurch gekennzeichnet, dass** die Mittel einen zumindest teilweisen Formschluss von zueinander weisenden bzw. aneinander grenzenden Seitenflächen des Befestigungssockels (3) und des Sensormoduls (4) ermöglichen.

3. Anordnung nach Anspruch 1, **dadurch gekennzeichnet, dass** die Mittel einen zumindest teilweisen Formschluss von zueinander weisenden bzw. aneinander grenzenden bzw. ineinander greifenden Montageflächen des Befestigungssockels (3) und des Sensormoduls (4) ermöglichen.

4. Anordnung nach einem der Ansprüche 1 bis 3, **dadurch gekennzeichnet, dass** die Mittel aus miteinander korrespondierenden Nuten (7) bzw. Stegen (5) an äußeren Seitenflächen des Befestigungssockels (3) bzw. des Sensormoduls (4) gebildet sind.

5. Anordnung nach einem der voranstehenden Ansprüche, **dadurch gekennzeichnet, dass** der Befestigungssockel (3) einen geschlossenen Sockelrahmen (12) aufweist, innerhalb dessen Umfanges das Sensormodul (4) montierbar ist.

6. Anordnung nach Anspruch 5, **dadurch gekennzeichnet, dass** an der zum Sensormodul (4) weisenden Innenseite des Sockelrahmens (12) jeweils wenigstens eine Nut (7) bzw. ein Steg (5) vorgesehen ist, der mit einem entsprechenden Steg (5) bzw. einer entsprechenden Nut (7) am Außenumfang des Sensormoduls (4) korrespondiert.

7. Anordnung nach Anspruch 5 oder 6, **dadurch gekennzeichnet, dass** der Sockelrahmen (12) eine Stufe bzw. einen Absatz (14) am Innenumfang aufweist, auf der eine Platine oder Halteplatte (16) des Sensormoduls (4) aufsetzbar bzw. fixierbar ist.

8. Anordnung nach einem der Ansprüche 5 bis 7, **dadurch gekennzeichnet, dass** das Sensormodul (4) bzw. dessen Halteplatte (16) mit dem Sockelrahmen (12) des Befestigungssockels (3) verklebbar ist.

9. Anordnung nach einem der Ansprüche 1 bis 8, **dadurch gekennzeichnet, dass** zumindest ein Teil einer Andrückkraft des Sensormoduls (4) an die Windschutzscheibe (15) über eine Haftkraft zwischen einer Befestigungsfläche (2) des Befestigungssockels (3) an der Windschutzscheibe (15) aufgebracht ist.

10. Anordnung nach einem der Ansprüche 7 bis 9, **dadurch gekennzeichnet, dass** das Sensormodul (4) im mit dem Sockelrahmen (12) des Befestigungssockels (3) fixierten Zustand einen definierten Abstand zur Innenseite der Windschutzscheibe (15) aufweist.

11. Anordnung nach einem der voranstehenden Ansprüche, **dadurch gekennzeichnet, dass** das Sensormodul (4) einen oder mehrere Zapfen (22) aufweist, die in entsprechende Aufnahmen (21) an einer zur Windschutzscheibe (15) weisenden Unterseite des Befestigungssockels (3) eingreifen und dort fixierbar bzw. verklebbar sind.

12. Innenrückspiegel zur klebenden Montage an einer Innenseite einer Windschutzscheibe eines Kraftfahrzeuges, der einen Befestigungssockel (3) gemäß wenigstens einem der Ansprüche 1 bis 11 aufweist.

13. Optisches Sensormodul (4), insbesondere Regensensormodul zur Montage an einer Innenseite einer Windschutzscheibe (15) eines Kraftfahrzeugs, das gemäß wenigstens einem der Ansprüche 1 bis 11 ausgestaltet ist.
